# EUROPEAN PATENT APPLICATION

(11) **EP 4 563 634 A1**
(43) Date of publication of application: **04.06.2025**
(21) Application number: 24216105.7
(22) Date of filing: 28.11.2024
(51) Int. Cl.: C08K 5/053, C08L 3/02, C08L 67/03

(54) **BIODEGRADABLE RESIN COMPOSITION, BIODEGRADABLE FILM AND MULTILAYER BARRIER FILM, AND METHOD OF MANUFACTURING SUCH FILM**

(30) Priority: 30.11.2023 KR 20230171124
(71) Applicant: SK innovation Co., Ltd., Seoul 03188 (KR)
(72) Inventor: LEE, Sang Yeup, 34124 Daejeon (KR); LEE, Sung Won, 34124 Daejeon (KR)
(74) Representative: Thoma, Michael

(57) **Abstract**

A biodegradable resin composition according to embodiments of the present disclosure includes thermoplastic starch, a biodegradable polymer having a melt flow index of greater than 30 g/10 min under conditions of 190°C and a load of 2.16 kg, and a plasticizer, wherein a content of the biodegradable polymer is 30 wt% based on a total weight of the biodegradable resin composition. The melt flow index of the biodegradable resin composition measured under conditions of 190°C and a load of 2.16 kg is 2.5 g/10 min to 20 g/10 min. A biodegradable film and a multilayer barrier film according to embodiments of the present disclosure include a resin layer formed from the biodegradable resin composition.

## Description

### [BACKGROUND OF THE INVENTION]

### 1. Field of the Invention

The present disclosure relates to a biodegradable resin composition and a film formed from the biodegradable resin composition, and to a method of manufacturing such film.

### 2. Description of the Related Art

Metal or a synthetic resin is applied to various industrial materials such as a disposable product and a packaging material, etc. For example, a plastic film formed from a metal foil or the synthetic resin may be used as the packaging material. However, the metal foil has no recyclability, and the plastic film is a non-degradable resin which is not decomposed naturally, such that harmful substances may be generated during a disposal process.

Recently, a biodegradable resin is being used as a substitute for the non-degradable resin. The biodegradable resin is a resin that can be decomposed naturally by natural organic organisms such as bacteria and microorganisms, etc. In recent years, as environmental issues due to the non-degradable resin is increased, the demand for the biodegradable resin is increasing.

For example, the biodegradable resin is utilized in various industrial fields such as a packaging material industry, electronic product industry, automobile industry, building material industry, marine industry, stationery industry, pulp and paper industry, etc.

The biodegradable resin has higher biodegradability than the synthetic resin, but flexibility, mechanical properties, workability, and gas barrier properties of films formed from the biodegradable resin may be lower than those of the synthetic resin. Therefore, it is necessary to develop a biodegradable resin having improved gas barrier properties, durability, and film workability, while improving biodegradability.

### [SUMMARY OF THE INVENTION]

An object of the present disclosure is to provide a biodegradable resin composition capable of providing improved biodegradability and barrier properties.

In addition, another object of the present disclosure is to provide a biodegradable film having improved biodegradability and barrier properties.

Further, another object of the present disclosure is to provide a multilayer barrier film having improved biodegradability and barrier properties.

To achieve the above object, according to an aspect of the present invention, there is provided a biodegradable resin composition including: thermoplastic starch (TPS); a biodegradable polymer having a melt flow index of greater than 30 g/10 min under conditions of 190°C and a load of 2.16 kg; and a plasticizer, wherein a content of the biodegradable polymer is 30% by weight or less based on a total weight of the biodegradable resin composition, and the melt flow index measured under conditions of 190°C and a load of 2.16 kg is 2.5 g/10 min to 20 g/10 min.

In some embodiments, the biodegradable polymer may include an aliphatic polyester resin.

In one embodiment, the biodegradable polymer may include polybutylene adipate terephthalate (PBAT).

In some embodiments, the content of the biodegradable polymer may be 10% by weight to 30% by weight based on the total weight of the biodegradable resin composition.

In some embodiments, the melt flow index of the biodegradable polymer measured under conditions of 190°C and a load of 2.16 kg may be greater than 30 g/10 min and 75 g/10 min or less.

In some embodiments, a content of the plasticizer may be less than 20% by weight based on the total weight of the biodegradable resin composition.

In one embodiment, the content of the plasticizer may be 1% by weight to 10% by weight based on the total weight of the biodegradable resin composition.

In some embodiments, the plasticizer may include a first plasticizer including a dihydric alcohol or a trihydric alcohol, and a second plasticizer including a tetrahydric or higher polyhydric alcohol.

In one embodiment, a content of the second plasticizer may be greater than a content of the first plasticizer based on the weight.

In some embodiments, a content of the thermoplastic starch may be 50% by weight or more based on the total weight of the biodegradable resin composition.

In one embodiment, the content of the thermoplastic starch may be 50% by weight to 90% by weight based on the total weight of the biodegradable resin composition.

In some embodiments, a ratio of the content of the thermoplastic starch to the content of the biodegradable polymer may be 2 or more based on the weight.

In addition, according to another aspect of the present invention, there is provided a biodegradable film formed from the biodegradable resin composition according to the above-described embodiments.

In some embodiments, the biodegradable film may have an oxygen gas permeability of 50 g/m²·day or less, which is measured under conditions of a relative humidity of 0% and a temperature of 25°C at a thickness of 100 µm to 200 µm

Further, according to another aspect of the present invention, there is provided a multilayer barrier film including: a first resin layer; a barrier layer disposed on the first resin layer, and formed from the biodegradable resin composition according to the above-described embodiments; and a second resin layer disposed on the barrier layer.

In some embodiments, each of the first resin layer and the second resin layer may have a lower water vapor transmission rate than the barrier layer.

In some embodiments, each of the first resin layer and the second resin layer may include a polyolefin polymer or a polyester polymer.

The biodegradable resin composition according to exemplary embodiments includes thermoplastic starch and a biodegradable polymer. Thereby, the biodegradability and gas barrier properties of a film formed from the biodegradable resin composition may be improved.

The biodegradable polymer may have a melt flow index within a predetermined range. Thereby, workability of the film of the biodegradable resin composition may be improved. The biodegradable polymer may include a polyester resin. Thus, the moldability, workability, and productivity may be improved, while further increasing gas barrier properties of the biodegradable film.

The melt flow index of the biodegradable resin composition may be adjusted within a predetermined range. Accordingly, the workability of the film may be improved while improving the mechanical properties.

### [BRIEF DESCRIPTION OF THE DRAWINGS]

The above and other objects, features and other advantages of the present invention will be more clearly understood from the following detailed description taken in conjunction with the accompanying drawing, in which:

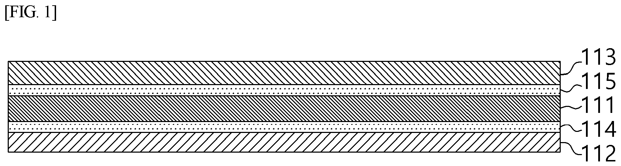

FIG. 1 is a schematic cross-sectional view illustrating a multilayer barrier film according to exemplary embodiments.

### [DETAILED DESCRIPTION OF THE INVENTION]

According to embodiments of the present disclosure, a biodegradable resin composition including thermoplastic starch and a biodegradable polymer is provided. In addition, a multilayer barrier film including a biodegradable film formed from the biodegradable resin composition and a barrier layer formed from the biodegradable resin composition are provided.

The terms "first," "second," "upper surface," "lower surface," etc. as used herein indicate relative positions of each component and do not mean an absolute upper-lower relationship therebetween.

The term "biodegradability" as used herein may mean that a substance is decomposed by natural organic organisms such as bacteria, germs, and microorganisms, etc., or natural environmental factors such as heat, moisture, and sunlight, etc. For example, the biodegradability may refer to biodegradability certified according to ISO 14851 or ISO 14855 standards.

Hereinafter, a biodegradable resin composition according to embodiments of the present disclosure will be described in detail. However, the embodiments are merely illustrative and the present disclosure is not limited to the specific embodiments described by way of example.

The biodegradable resin composition may include thermoplastic starch (TPS). The thermoplastic starch may refer to a starch-derived compound having thermoplasticity.

The biodegradable resin composition may include thermoplastic starch, thereby improving biodegradability and enhancing workability and moldability into a film. For example, when the resin composition includes starch with no thermoplasticity, film processing and molding may be substantially impossible.

In one embodiment, thermoplastic starch may be prepared by adding a polar compound as a plasticizer to starch derived from plants such as wheat, rice, corn, potato, sweet potato, cassapa, tapioca, etc., and performing physical or chemical treatment thereon. For example, a mixture of starch and the polar compound may be kneaded while applying a predetermined shear pressure to transform the starch into thermoplastic starch.

In one embodiment, a polyhydric alcohol compound such as glycerol, sorbitol, ethylene glycol, or mannitol, etc. may be used as the polar compound. A content of the polar compound in a total weight of the mixture of starch and the polar compound may be 20% by weight ("wt%") to 30 wt%. Within the above range, a melt flow index and biodegradability of the thermoplastic starch, and gas barrier properties of the film may be improved.

In one embodiment, the melt flow index (MFI), i.e., melt index (MI) of the thermoplastic starch may be greater than about 0 g/10 min and about 0.2 g/10 min or less. The melt flow index of the thermoplastic starch may be measured under conditions of 190°C and a load of 2.16 kg. Within the above range, the gas barrier properties, workability, and mechanical properties of the thermoplastic resin composition may be further improved.

In addition, the thermoplastic starch has high miscibility with other resins. Therefore, dispersibility of the resin or polymer components in the biodegradable resin composition may be enhanced.

In some embodiments, a content of the thermoplastic starch may be 50 wt% or more based on a total weight of the biodegradable resin composition. The thermoplastic starch may be included in the biodegradable resin composition as a main component thereof, thereby improving the biodegradability and gas barrier properties of the film formed from the biodegradable resin composition.

In one embodiment, the content of the thermoplastic starch may be about 50 wt% to 98 wt%, 50 wt% to 90 wt%, 55 wt% to 85 wt%, or 60 wt% to 80 wt% based on the total weight of the biodegradable resin composition.

The biodegradable resin composition may include a biodegradable polymer. The biodegradable polymer may refer to a resin or polymer having biodegradability.

The melt flow index of the biodegradable polymer may be greater than 30 g/10 min. The melt flow index of the biodegradable polymer may be measured under conditions of 190°C and a load of 2.16 kg.

The workability of the biodegradable resin composition may be improved by the biodegradable polymer having the melt flow index in the above range. For example, when the resin composition includes only thermoplastic starch or includes a biodegradable polymer having a melt flow index of 30 g/10 min or less, the melt flowability of the resin composition may be deteriorated. Accordingly, the moldability and mechanical properties of the film may be decreased.

According to exemplary embodiments, processing of the film may be facilitated while having a level of biodegradability that can be naturally degradable by the biodegradable polymer having a melt flow index of greater than 30 g/10 min.

In some embodiments, the melt flow index of the biodegradable polymer may be greater than about 30 g/10 min and about 75 g/10 min or less, greater than about 30 g/10 min and about 70 g/10 min or less, greater than about 30 g/10 min and about 60 g/10 min or less, or about 40 g/10 min to about 60 g/10 min. Within the above range, the workability and moldability of the biodegradable resin composition may be further improved without causing a decrease in the gas barrier properties and mechanical properties of the film.

The content of the biodegradable polymer may be 30 wt% or less based on the total weight of the biodegradable resin composition. Accordingly, the mechanical properties, gas barrier properties, and hygroscopicity of the film formed from the biodegradable resin composition may be further improved.

For example, when the content of the biodegradable polymer exceeds 30 wt%, the dispersibility between the biodegradable polymer and the thermoplastic starch may be decreased, and the melt flowability may be excessively increased, thereby decreasing the strength and durability of the film. In addition, the melt strength of the biodegradable resin composition may be excessively reduced, thereby decreasing the film moldability, and a microcrystal structure of the thermoplastic starch may be destroyed by the biodegradable polymer, thereby increasing gas permeability and hygroscopicity.

In some embodiments, the content of the biodegradable polymer may be about 1 wt % to about 30 wt %, about 10 wt % to about 30 wt %, or about 15 wt % to about 30 wt % based on the total weight of the biodegradable resin composition. Within the above range, the workability and moldability of the biodegradable resin composition may be improved, as well as the mechanical properties and barrier properties of the film may be further improved.

In some embodiments, a ratio of the content of the thermoplastic starch to the content of the biodegradable polymer may be 2 or more based on the weight, and about 2 to 10, or about 2 to 8. Within the above range, the melt flowability and workability of the thermoplastic resin composition may be improved, as well as the barrier properties of the film may be further improved. For example, as the content of the biodegradable polymer is increased, an inherent crystal structure of the thermoplastic starch may be destroyed, thereby increasing a penetration path of oxygen.

In some embodiments, the biodegradable polymer may include an aliphatic polyester resin. The term "aliphatic" as used herein may refer to a structure that does not include aromaticity such as a benzene ring, etc. When including an aliphatic polyester resin as the biodegradable polymer, the compatibility of the biodegradable polymer and thermoplastic starch may be further enhanced.

In some embodiments, the aliphatic polyester resin may include at least one of polybutylene adipate terephthalate (PBAT), polybutylenes succinate (PBS), polylactic acid (PLA), polyglycolic acid (PGA) and polycaprolactone (PCL).

In some embodiments, the biodegradable polymer may include polybutylene adipate terephthalate. The polybutylene adipate terephthalate has high affinity with the thermoplastic starch, such that the dispersibility and kneading uniformity of the biodegradable resin composition may be further improved. Accordingly, the film may be easily formed and processed, as well as the mechanical properties and barrier properties may be further improved.

The biodegradable resin composition may include a plasticizer. Thereby, the melt flowability of the biodegradable resin composition may be improved by the plasticizer, and the stiffness and brittleness of the film may be improved.

According to exemplary embodiments, a content of the plasticizer may be less than 20 wt%. Accordingly, the melt flowability of the biodegradable resin composition, the stiffness and brittleness of the film may be adjusted to an appropriate range, such that the workability and moldability may be improved.

For example, when the content of the plasticizer is 20 wt% or more, the plasticizer may move to the surface of the film and leach out of the film, and the mechanical properties and gas barrier properties may be decreased. In addition, the melt strength of the resin composition may be excessively reduced, thereby causing a decrease the moldability of the film, and an increase in the moisture absorbing properties of the film due to the polar plasticizer.

In some embodiments, the content of the plasticizer may be about 1 wt% or more and less than about 20 wt%, about 1 wt% to about 15 wt%, about 1 wt% to about 10 wt%, or about 5 wt% to about 10 wt% based on the total weight of the biodegradable resin composition.

In one embodiment, the content of the biodegradable polymer may be greater than the content of the plasticizer.

In some embodiments, the plasticizer may include a compound having a polar functional group. In one embodiment, the plasticizer may include a polyhydric alcohol compound.

The polyhydric alcohol compound may include a sugar compound such as glucose, sucrose, fructose, galactose, xylose, maltose, lactose, etc., a sugar alcohol compound such as erythritol, xylitol, malitol, mannitol, sorbitol, polyglycitol, glycerol, etc., a glycol compound such as ethylene glycol, propylene glycol, etc.

In some embodiments, the plasticizer may include a first plasticizer including a dihydric alcohol or a trihydric alcohol, and a second plasticizer including a tetrahydric or higher polyhydric alcohol. When including heterogeneous alcohols having the specific functional number together, a decrease in the mechanical properties and barrier properties of the film may be suppressed, as well as the melt flowability of the resin composition may be further improved.

For example, the first plasticizer may include ethylene glycol, propylene glycol, glycerol and the like. For example, the second plasticizer may include erythritol, xylitol, malitol, polyglycitol, sorbitol and the like.

In one embodiment, the content of the second plasticizer may be greater than the content of the first plasticizer. For example, a ratio of the content of the second plasticizer to the content of the first plasticizer may be greater than 1 and 10 or less, 2 to 5, or 3 to 5 based on the weight. Within the above range, the moldability, barrier properties, and strength of the film may be further enhanced.

The melt flow index of the biodegradable resin composition may be about 2.5 g/10 min to 20 g/10 min. The melt flow index of the biodegradable resin composition may be measured under conditions of 190°C and a load of 2.16 kg.

When the melt flow index of the biodegradable resin composition is less than 2.5 g/10 min, the melt flow rate is low, such that the workability of the film may be decreased, a surface roughness of the film may be increased, and the film may be easily broken, thereby making it difficult to form a film having a desired shape. When the melt flow index of the biodegradable resin composition is greater than 20 g/10 min, the film may not be substantially formed, and even if the film is formed, the melt strength and mechanical properties of the film may be decreased.

In some embodiments, the melt flow index of the biodegradable resin composition may be about 3 g/10 min to 20 g/10 min, about 5 g/10 min to 16 g/10 min, or about 7 g/10 min to 15 g/10 min. Within the above range, the workability, moldability, flexibility, and strength of the film may be further improved.

In some embodiments, the biodegradable resin composition may further include other additives. For example, the additive may include antioxidants, thermal stabilizers, UV protectors, electrostatic endowing agents, antistatic agents, antiblocking agents, etc.

According to exemplary embodiments, the biodegradable resin composition may be formed by kneading thermoplastic starch, a biodegradable polymer and a plasticizer.

In some embodiments, the thermoplastic starch and the biodegradable polymer may be input into a hopper dryer and dried. The dried thermoplastic starch and biodegradable polymer may be dry kneaded along with the plasticizer.

The dry kneaded mixture may be input into an internal mixer and kneaded. A temperature of the internal mixer may be maintained at, for example, about 120°C to about 200°C, about 130°C to about 180°C, or about 150°C to about 180° C.

A rotation speed of the internal mixer rotor may be, for example, about 30 rpm to 120 rpm, about 40 rpm to 100 rpm, or about 60 rpm to 90 rpm. The kneading process may be performed for about 5 to 20 minutes or about 5 to 15 minutes, for example.

The kneaded product may be collected to obtain the biodegradable resin composition.

In one embodiment, the kneading process may be performed through an extruder other than the internal mixer. For example, the thermoplastic starch, the biodegradable polymer, and the plasticizer may be input into a single-screw extruder or a twin-screw extruder, then melted and kneaded.

In one embodiment, an inlet temperature of the extruder may be about 100°C to 160°C, or about 120°C to 150°C. In one embodiment, a barrel temperature of the extruder may be about 120°C to 200°C, or about 140°C to 180°C. In one embodiment, an outlet temperature of the extruder may be about 120°C to 200°C, or about 140°C to 180° C.

In some embodiments, the inlet temperature of the extruder may be lower than the barrel temperature and the outlet temperature. In one embodiment, the inlet temperature of the extruder may be about 15°C to 25°C lower than the barrel temperature and the outlet temperature.

In one embodiment, the rotation speed of the extruder may be about 100 rpm to 300 rpm.

The kneaded product discharged from the outlet of the extruder is obtained, and the kneaded product is cut in a pelletizer to obtain a biodegradable resin composition in the shape of pellets.

In one embodiment, the biodegradable resin composition may be processed/prepared by foaming-expansion molding, injection molding, compression molding, casting film molding process, inflation film molding process and the like.

The biodegradable film according to embodiments of the present disclosure may be formed from the biodegradable resin composition.

In some embodiments, the biodegradable film may be manufactured by pressing the biodegradable resin composition. The biodegradable resin composition may be pressed through a press.

In one embodiment, the pressing temperature may be maintained at about 100°C to about 200°C, about 120°C to about 180°C, or about 130°C to about 170° C.

In one embodiment, the biodegradable resin composition may be compressed at a pressure of 10 MPa to 30 MPa, 15 MPa to 25 MPa, or 18 MPa to 22 MPa for 1 minute to 3 minutes.

In some embodiments, the biodegradable resin composition may be extruded to manufacture a biodegradable film.

In one embodiment, the biodegradable resin composition may be dried at a temperature of 50°C to 120°C for 30 minutes to 5 hours. Accordingly, the workability of the biodegradable resin composition may be further improved.

The biodegradable resin composition may be input into the extruder and extruded. In one embodiment, the extruder may be the single-screw extruder or the twin-screw extruder.

In one embodiment, the melt extrusion temperature of the biodegradable resin composition may be about 120°C to 200°C, about 130°C to 180°C, or about 140°C to 160°C. In one embodiment, the rotation speed of the extruder may be about 20 rpm to 80 rpm.

The molten material, i.e., molten resin discharged from the extruder may be cooled to manufacture a biodegradable film.

In one embodiment, the biodegradable resin composition melted in the extruder may be extruded from a t-die to a chill roll and cooled (for example, a casting film manufacturing method). In one embodiment, the biodegradable resin composition melted in the extruder may be cooled by contact with air through an air ring in a ring-shaped die (e.g., a spiral die, etc.) (e.g., a blown film manufacturing method).

In some embodiments, the biodegradable film may have a thickness of about 50 µm to 250 µm, about 100 µm to 200 µm, or about 120 µm to 180 µm. Within the above range, the gas permeability to the film may be sufficiently reduced.

In one embodiment, the biodegradable film may have an oxygen gas permeability of 50 g/m²·day or less, 30 g/m²·day or less, or 10 g/m²·day or less. For example, the oxygen gas permeability of the biodegradable film may be 0.1 g/m²·day to 10 g/m²·day. The oxygen gas permeability of the biodegradable film may be measured under a relative humidity condition of 0% and a temperature condition of 25°C at a thickness of 100 µm to 200 µm.

Hereinafter, the present disclosure will be described in detail with reference to the drawing.

FIG. 1 is a schematic cross-sectional view illustrating a multilayer barrier film according to exemplary embodiments.

Referring to FIG. 1, the multilayer barrier film may include a first resin layer 112, a barrier layer 111 disposed on the first resin layer 112, and a second resin layer 113 disposed on the barrier layer 111.

The barrier layer 111 may be formed from the biodegradable resin composition according to the above-described embodiments. For example, the barrier layer 111 may be the above-described biodegradable film. Accordingly, the gas barrier property and biodegradability of the multilayer barrier film may be improved.

In some embodiments, the first resin layer 112 and the second resin layer 113 may have a lower water vapor transmission rate (WVTR) than the barrier layer 111. Therefore, the first resin layer 112 and the second resin layer 113 may substantially function as a moisture barrier layer, thereby suppressing deformation and damage of the barrier layer 111 due to moisture.

In some embodiments, the multilayer barrier film may have a water vapor transmission rate (WVTR) of 20 g/m²·day or less. For example, the water vapor transmission rate (WVTR) of the multilayer barrier film may be about 10 g/m²·day to 13 g/m²·day.

In some embodiments, the first resin layer 112 and the second resin layer 113 may have a higher strength than the barrier layer 111. Therefore, the impact resistance and mechanical properties of the multilayer barrier film may be further improved.

In some embodiments, the first resin layer 112 and the second resin layer 113 may include a polyolefin resin or a polyester resin.

The polyolefin resin may include polyethylene or polypropylene. The polyethylene may include high-density polyethylene (HOPE), low-density polyethylene (LDPE), linear low-density polyethylene (LLDPE), medium-density polyethylene (MDPE), etc.

The polyester resin may include polybutylene adipate terephthalate, polylactic acid, polycaprolactone, polybutylene succinate, polyglycolic acid, etc.

In one embodiment, the first resin layer 112 and the second resin layer 113 may include low-density polyethylene. Accordingly, the water resistance, mechanical properties, and impact resistance of the multilayer barrier film may be further improved.

In one embodiment, the first resin layer 112 and the second resin layer 113 may include polybutylene adipate terephthalate. Accordingly, the multilayer barrier film may have complete biodegradability certified according to the ISO 14851 standard or the ISO 14855 standard, and may suppress deformation and decrease in the properties due to moisture.

In one embodiment, the first resin layer 112, the second resin layer 113 and the barrier layer 111 may be manufactured by the same method as the method for manufacturing the above-described biodegradable film. For example, the resin layers or the barrier layer 111 may be formed by pressing or extruding the resin composition.

In some embodiments, the first resin layer 112 and the second resin layer 113 may be laminated with the barrier layer 111 through adhesive layers. For example, a first adhesive layer 114 may be disposed between the first resin layer 112 and the barrier layer 111, and a second adhesive layer 115 may be disposed between the barrier layer 111 and the second resin layer 113.

In one embodiment, the number of laminated layers of the multilayer barrier film may be 3 or more, 5 or more, or 7 or more. For example, a laminated structure of the first resin layer, the multilayer barrier film, and the second resin layer may be repeatedly laminated to form the multilayer barrier film, or the multilayer barrier film may further include another resin layer.

The multilayer barrier film may be provided as a barrier film for packaging materials of various products, such as packaging materials for food packaging and packaging materials for battery packaging, for example.

Hereinafter, experimental examples including specific examples and comparative examples are proposed to facilitate understanding of the present invention. However, the following examples are only given for illustrating the present invention and are not intended to limit the appended claims. It will be apparent those skilled in the art that various alterations and modifications are possible within the scope and spirit of the present invention, and such alterations and modifications are duly included in the appended claims.

### Experimental examples

### (1) Measurement of oxygen barrier properties of films according to polymer types

Thermoplastic starch (TPS) and a polymer were injected into an internal mixer (Brabender Measuring Mixer W50), as the types and contents described in Table 1 below. A kneaded product of about 73 wt% of tapioca starch and about 27 wt% of glycerol was used as the TPS. The melt flow index of TPS measured under conditions of 190°C and a load of 2.16 kg according to ASTM D1238 was 0.1 g/10 min or less.

The mixture was kneaded for 10 minutes by setting the temperature of the internal mixer to 160°C and the kneading speed to 80 rpm, then a resin composition of the kneaded product was collected.

The resin composition was placed in a press set to 150°C, and pressed at about 20 MPa for 2 minutes to manufacture a film having a thickness of about 100 µm to 150 µm.

The film was mounted on an oxygen permeability meter (MOCON OX TRANS model 2/61) to measure an oxygen permeability. The oxygen permeability was measured at a point where the permeability is stabilized after measuring for 12 hours under a relative humidity condition of 0% and a temperature condition of 25°C. Measurement results are shown in Table 1 below.

**[TABLE 1]**

| Sample | TPS | Polymer | | Oxygen permeability (g/m²·day) |
|---|---|---|---|---|
| | Content (wt%) | Type | Content (wt%) | |
| No. 1 | 70 | PBAT | 30 | 3.5 |
| No. 2 | 70 | PCL | 30 | 3 |
| No. 3 | 70 | PLA | 30 | 3 |
| No. 4 | 70 | EAA | 30 | 210 |
| No. 5 | 70 | ZnIO | 30 | 120 |
| No. 6 | 70 | EBA | 30 | 280 |
| No. 7 | 70 | EGA | 30 | 260 |
| No. 8 | 70 | EMA | 30 | 250 |

The specific components of the compounds described in Table 1 above are as follows.
PBAT: Polybutylene adipate terephthalate (terpolymer of butanol, adipic acid and terephthalic acid)
PCL: Polycaprolactone (manufactured by Sigma Aldrich)
PLA: Polylactic acid (manufactured by Sigma Aldrich)
EAA: Ethylene acrylic acid copolymer (Acrylic acid 13.5 wt%, manufactured by SKGC Primacor)
ZnIO: Ethylene acrylic acid zinc acrylate terpolymer (Acrylic acid 11.5 wt%, Zinc acrylate 2 wt%, manufactured by SKGC Primacor IO)
EBA: Ethylene butylacrylate copolymer (Butyl acrylate 40 wt%, manufactured by SKGC Lotryl)
EGA: Ethylene glycidyl methyl methacrylate terpolymer (Glycidyl 8 wt%, Methyl methacrylate 24 wt%, manufactured by SKGC Lotader)
EMA: Ethylene maleic anhydride ethyl methacrylate terpolymer (Maleic anhydride 2.8 wt%, Ethyl methacrylate 6.5 wt%, manufactured by SKGC Lotader

Referring to Table 1 above, in Samples No. 1, No. 2 and No. 3 including a biodegradable polymer (aliphatic ester resin) as a polymer mixed with thermoplastic starch, the film had a low oxygen permeability of 3.5 g/m²·day or less.

However, in Samples No. 4 to No. 8, a polyolefin-based copolymer was kneaded along with the thermoplastic starch, and the gas barrier property was greatly increased to 120 g/m²·day or more.

### (2) Measurement of oxygen barrier property of film depending on PBAT content

A resin composition and a film were manufactured in the same manner as in Experimental Example (1) by changing the contents of TPS and PBAT as shown in Table 2 below, and The oxygen permeability of the film was measured in the same manner as in Experimental Example (1). Measurement results are shown in Table 2 below.

**[TABLE 2]**

| Sample | TPS | PBAT | Oxygen permeability (g/m²·day) |
|---|---|---|---|
| | Content (wt%) | Content (wt%) | |
| No. 1 | 70 | 30 | 3.5 |
| No. 9 | 65 | 35 | 27.6 |
| No. 10 | 60 | 40 | 67.9 |
| No. 11 | 50 | 50 | 147.3 |
| No. 12 | 20 | 80 | 270.6 |

Referring to Table 2 above, in the case of samples having a PBAT content greater than 30 wt%, the oxygen permeability of the film was increased to 27 g/m²·day or more. Referring to the samples, as the PBAT content of the resin composition was increased, the oxygen barrier property of the film was decreased.

### Examples 1 to 8 and Comparative Examples 1 to 13

### (1) Manufacture of biodegradable resin composition and biodegradable film

Thermoplastic starch (TPS), PBAT, and a plasticizer were injected into an internal mixer (Brabander Measuring Mixer W50), as the types and contents described in Table 3 below. A kneaded product of about 73 wt% of tapioca starch and about 27 wt% of glycerol was used as the TPS. The melt flow index of TPS measured under conditions of 190°C and a load of 2.16 kg according to ASTM D1238 was 0.1 g/10 min or less. The melt flow index of PBAT was measured under conditions of 190°C and a load of 2.16 kg according to ASTM D1238.

The mixture was kneaded for 10 minutes by setting the temperature of the internal mixer to 160°C and the kneading speed to 80 rpm, then a biodegradable resin composition of the kneaded product was collected.

The biodegradable resin composition was placed in a press set to 150°C and, pressed at about 20 MPa for 2 minutes to manufacture a biodegradable film having a thickness of about 100 µm to 200 µm.

### (2) Measurement of melt flow index

The melt flow index (MFI) of the biodegradable resin composition was measured under a temperature condition of 190°C and a load condition of 2.16 kg according to ASTM D1238.

### (3) Measurement of oxygen transmission rate (OTR)

The biodegradable film was mounted on an oxygen transmission rate meter (MOCON, OX TRANS model 2/61) to measure an oxygen permeability (OTR). The oxygen permeability was measured at a point where the permeability is stabilized after measuring for 12 hours under a relative humidity condition of 0% and a temperature condition of 25°C.

Measurement results are shown in Table 3 below.

**[TABLE 3]**

| | TPS | PBAT | | Plasticizer A | Plasticizer A | MI (g/10 min) | OTR (g/m²·day) |
|---|---|---|---|---|---|---|---|
| | Conte nt (wt%) | Type | Conte nt (wt%) | Content (wt%) | Content (wt%) | | |
| Example 1 | 65 | A | 30 | 1 | 4 | 3.5 | 0.9 |
| Example 2 | 65 | C | 30 | 1 | 4 | 7.5 | 1.5 |
| Example 3 | 65 | D | 30 | 1 | 4 | 9.3 | 3 |
| Example 4 | 60 | A | 30 | 2 | 8 | 6.5 | 2.1 |
| Example 5 | 60 | C | 30 | 2 | 8 | 10.7 | 3.5 |
| Example 6 | 80 | A | 10 | 2 | 8 | 2.5 | 0.8 |
| Example 7 | 80 | C | 10 | 2 | 8 | 6.0 | 1.0 |
| Example 8 | 80 | D | 10 | 2 | 8 | 7.9 | 1.8 |
| Comparative example 1 | 60 | E | 40 | - | - | 2.5 | 52.6 |
| Comparative example 2 | 60 | A | 40 | - | - | 3.4 | 67.9 |
| Comparative example 3 | 60 | C | 40 | - | - | 4.2 | 77.5 |
| Comparative example 4 | 65 | A | 35 | - | - | 2.8 | 27.6 |
| Comparative example 5 | 65 | C | 35 | - | - | 3.3 | 28.3 |
| Comparative example 6 | 65 | D | 35 | - | - | 4.2 | 35.4 |
| Comparative example 7 | 70 | E | 30 | - | - | 0.5 | 0.9 |
| Comparative example 8 | 70 | A | 30 | - | - | 1.4 | 1.2 |
| Comparative example 9 | 70 | B | 30 | - | - | 1.5 | 1.1 |
| Comparative example 10 | 70 | D | 30 | - | - | 2.2 | 1.9 |
| Comparative example 11 | 60 | F | 30 | 2 | 8 | 3.6 | 1.9 |
| Comparative example 12 | 60 | E | 20 | 4 | 16 | 27.7 | 2.3 |
| Comparative example 13 | 60 | A | 20 | 4 | 16 | 32.2 | 2.8 |

The specific components of the compounds described in Table 3 are as follows.
A: PBAT having a melt flow index of 32.2 g/10 min
B: PBAT having a melt flow index of 42.4 g/10 min
C: PBAT having a melt flow index of 56.0 g/10 min
D: PBAT having a melt flow index of 70.0 g/10 min
E: PBAT having a melt flow index of 10.3 g/10 min
F: PBAT with a melt flow index of 20.7 g/10 min
G: Glycerol
H: Sorbitol

Referring to Table 3 above, in the case of the examples, the melt flow index was adjusted to an appropriate range by including PBAT having a melt flow index greater than 30 g/10 min of the biodegradable resin composition, and the film had a low oxygen permeability.

In the case of Comparative Examples 1 to 6, the content of PBAT was greater than 30 wt%, and the oxygen permeability of the film greatly was increased to 27 g/m²·day or more.

In the case of Comparative Examples 7 to 10, the melt flow index of the biodegradable resin composition was less than 2.5 g/10 min, and the workability and moldability were decreased.

In the case of Comparative Example 11, PBAT having a melt flow index of less than 30 g/10 min was used, and the melt flow index of the biodegradable resin composition was less than 5 g/10 min. The melt flow index was significantly decreased compared to Examples 4 and 5 including the same plasticizer.

In the case of Comparative Examples 12 and 13, the melt flow index of the biodegradable resin composition was significantly increased to 27 g/10 min or more.

### Examples 9 and 10, and Comparative Examples 14 and 15

### (1) Preparation of biodegradable resin composition

Thermoplastic starch (TPS), PBAT, and a plasticizer were dry kneaded, as the types and contents described in Table 4 below to prepare a sample of 6 kg.

The dry kneaded sample was input into a co-rotating twin-screw extruder and kneaded. The length to diameter (L/D) ratio of the twin-screw extruder was about 45. The inlet temperature of the extruder was maintained at 130°C, and the temperatures of the barrel and outlet of the extruder were maintained at 150°C, respectively. The rotation speed of the extruder was adjusted within 100 rpm to 300 rpm.

The kneaded product discharged from the outlet of the extruder was transported to a cooling belt and cut in a pelletizer to obtain a pelletized biodegradable resin composition.

### (2) Measurement of melt flow index

The melt flow index (MFI) of the biodegradable resin composition was measured under a temperature condition of 190°C and a load condition of 2.16 kg according to ASTM D1238.

### (3) Manufacture of biodegradable film

The biodegradable resin composition was processed into a film in an inflation film processing machine. Specifically, the pellet-shaped biodegradable resin composition was input into the inflation film processing machine, and melt-extruded through an inflation die in an extrusion section. A circular die having a diameter of 50 nm was used as the inflation die. The temperature of the extrusion section was maintained at about 145°C, and the speed of the extrusion section was adjusted to 20 rpm to 80 rpm. The molten resin extruded from the extrusion section was discharged to a film manufacturing section, and the molten film discharged from the film manufacturing section was cooled by bubbling to manufacture a film. The bubble-up ratio (BUR) was adjusted to 2 to 4 so that the diameter of the molten film was 100 mm to 200 mm.

In the film manufacturing section, the cooled film was transported and wound into a roll shape using a nip roll and a winder roll. The speed of the nip roll was adjusted to 2 m/min to 6 m/min, the speed of the winder roll was adjusted to 3 m/min to 7 m/min, and the speed of the winder roll was set to be higher than the speed of the nip roll. The film was formed to have a thickness of about 100 µm to 200 µm.

### (4) Measurement of oxygen permeability (OTR)

The film was mounted on an oxygen permeability meter (MOCON, OX TRANS model 2/61) to measure an oxygen permeability (OTR). The oxygen permeability was measured at a point where the permeability is stabilized after measuring for 12 hours under a relative humidity condition of 0% and a temperature condition of 25°C.

The upper limit of the oxygen permeability measuring device is 1,200 g/m²·day, and when the oxygen permeability is greater than 1,200 g/m²·day, the oxygen permeability is indicated as 'Over' in Table 4.

Measurement results are shown in Table 4 below.

**[TABLE 4]**

| | TPS | PBAT | | Plasticizer A | Plasticizer A | MI (g/10 min) | OTR (g/m²·day) |
|---|---|---|---|---|---|---|---|
| | Conte nt (wt%) | Type | Conte nt (wt%) | Content (wt%) | Content (wt%) | | |
| Example 9 | 60 | A | 30 | 2 | 8 | 9.5 | 0.8 |
| Example 10 | 65 | C | 30 | 1 | 4 | 10.3 | 1.5 |
| Comparative example 14 | 70 | A | 30 | - | - | 1.1 | Over |
| Comparative example 15 | 60 | E | 30 | 2 | 8 | 2.5 | Over |

Referring to Table 4 above, in the case of Comparative Examples 14 and 15, the moldability of the film was decreased in the inflation processing method due to the low melt flowability of the biodegradable resin composition. Specifically, when forming bubbles by air injection, the film was torn, or the surface roughness of the film was increased, and thus the oxygen barrier property was decreased.

In the case of Examples 9 and 10, the biodegradable resin composition had a high melt flow index, and the film had a low oxygen permeability. The biodegradable resin compositions according to the examples had high film workability and moldability in both the pressing method (Examples 1 to 8) and the continuous film processing method (Examples 9 and 10).

### Examples 11 and 12

### (1) Manufacture of multilayer barrier film

A barrier layer was prepared using the biodegradable resin composition used in Example 9. Specifically, the pellet-shaped biodegradable resin composition was input into the inflation film processing machine, and melt-extruded using the inflation die in the extrusion section. A circular die having a diameter of 50 nm was used as the inflation die. The temperature of the extrusion section was maintained at about 145°C, and the speed of the extrusion section was adjusted to the speed shown in Table 6 below. The molten resin extruded from the extrusion section was discharged to the film manufacturing section, and the molten film discharged from the film manufacturing section was cooled by bubbling. The bubble-up ratio (BUR) was adjusted to 2 to 4 so that the diameter of the melt was 100 mm to 200 mm.

The cooled molten film was manufactured into a barrier layer using a nip roll and a winder roll in the film manufacturing section. The speed of the nip roll was adjusted to 2.9 m/min, and the speed of the winder roll was adjusted to 3 m/min to 4 m/min.

A first resin layer and a second resin layer were manufactured using the resins described in Table 5 below. The first resin layer and the second resin layer were manufactured in the same manner as the barrier layer manufacturing method, except that the resin composition, the temperature of the extrusion section, and the speed of the extrusion section were changed as shown in Table 5 below. The first resin layer, the barrier layer and the second resin layer were sequentially laminated to manufacture a multilayer barrier film. The total thickness of the multilayer barrier film was adjusted as shown in Table 5 below.

**[TABLE 5]**

| | First resin layer | | | Second resin layer | | | Total thickness (µm) |
|---|---|---|---|---|---|---|---|
| | Resin | Tempera ture (°C) | Speed (rpm) | Resin | Temper ature (°C) | Speed (rpm) | |
| Example 11 | LLDPE | 170 | 20 | LLDPE | 170 | 20 | 60-150 |
| Example 12 | PBAT | 160 | 40 | PBAT | 160 | 40 | 130-190 |

### (2) Measurement of oxygen transmission rate (OTR)

When manufacturing the barrier layer, the speed of the extrusion section was changed as shown in Table 6 below, and the barrier layer was adjusted to have the thickness shown in Table 6 below.

Each manufactured multilayer barrier film was mounted on an oxygen transmission rate measuring device (MOCON, OX TRANS model 2/61) to measure an oxygen permeability (OTR). The oxygen permeability was measured at a point where the permeability is stabilized after measuring for 12 hours under a relative humidity condition of 0% and a temperature condition of 25°C.

Measurement results are shown in Table 6 below.

**[TABLE 6]**

| | Extrusion section speed 20 rpm | | Extrusion section speed 40 rpm | | Extrusion section speed 60 rpm | | Extrusion section speed 80 rpm | |
|---|---|---|---|---|---|---|---|---|
| | Thickn ess (µm) | OTR (g/m²·d ay) | Thickn ess (µm) | OTR (g/m²·d ay) | Thickn ess (µm) | OTR (g/m²·d ay) | Thickn ess (µm) | OTR (g/m²·d ay) |
| Example 11 | 20-30 | 0.9 | 40-55 | 0.5 | 50-70 | 0.5 | - | |
| Example 12 | - | - | 20-30 | 1.0 | 30-45 | 0.5 | 50-60 | 0.4 |

Referring to Table 6 above, in Examples 11 and 12, the resin layers were disposed on upper and lower surfaces of the barrier layer, respectively, to manufacture a multilayer barrier film. The barrier layers of Examples 11 and 12 had a thinner thickness than the biodegradable film of Example 9, but the oxygen barrier property was further improved by the resin layer.

In the case of the multilayer barrier film of Example 11, the moisture permeability measured based on ASTM F1249 using a moisture permeability meter (MOCON, PERMATRAN_W 3/33 MA) under conditions of a temperature of 37.6°C and a permeation area of 50 cm² was about 10 g/m²·day to 13 g/m²·day. The resin layers are disposed on the upper and lower surfaces of the barrier layer, such that moisture permeability may be additionally suppressed.

## Claims

1. A biodegradable resin composition comprising:
thermoplastic starch (TPS);
a biodegradable polymer having a melt flow index of greater than 30 g/10 min under conditions of 190°C and a load of 2.16 kg; and
a plasticizer,
wherein a content of the biodegradable polymer is 30% by weight or less based on a total weight of the biodegradable resin composition, and
the melt flow index measured under conditions of 190°C and a load of 2.16 kg is 2.5 g/10 min to 20 g/10 min.

2. The biodegradable resin composition according to claim 1, wherein the biodegradable polymer comprises an aliphatic polyester resin.

3. The biodegradable resin composition according to claims 1 or 2, wherein the biodegradable polymer comprises polybutylene adipate terephthalate (PBAT).

4. The biodegradable resin composition according to any one of claims 1 to 3, wherein the content of the biodegradable polymer is 10% by weight to 30% by weight based on the total weight of the biodegradable resin composition.

5. The biodegradable resin composition according to any one of claims 1 to 4, wherein the melt flow index of the biodegradable polymer measured under conditions of 190°C and a load of 2.16 kg is greater than 30 g/10 min and 75 g/10 min or less, preferably 40 g/10 min to 60 g/10 min.

6. The biodegradable resin composition according to any one of claims 1 to 5, wherein a content of the plasticizer is less than 20% by weight, preferably 1% by weight to 10% by weight, based on the total weight of the biodegradable resin composition.

7. The biodegradable resin composition according to any one of claims 1 to 6, wherein the plasticizer comprises a first plasticizer including a dihydric alcohol or a trihydric alcohol, and a second plasticizer including a tetrahydric or higher polyhydric alcohol.

8. The biodegradable resin composition according to claim 8, wherein a content of the second plasticizer is greater than a content of the first plasticizer based on the weight.

9. The biodegradable resin composition according to any one of claims 1 to 8, wherein a content of the thermoplastic starch is 50% by weight or more, preferably 50% by weight to 90% by weight, based on the total weight of the biodegradable resin composition.

10. The biodegradable resin composition according to any one of claims 1 to 9, wherein a ratio of the content of the thermoplastic starch to the content of the biodegradable polymer is 2 or more, preferably 2 to 10, based on the weight.

11. A biodegradable film formed from the biodegradable resin composition according to any one of claims 1 to 10.

12. The biodegradable film according to claim 11, wherein the biodegradable film has an oxygen gas permeability of 50 g/m²·day or less, which is measured under conditions of a relative humidity of 0% and a temperature of 25°C at a thickness of 100 µm to 200 µm.

13. A multilayer barrier film comprising:
a first resin layer (112);
a barrier layer (111) disposed on the first resin layer (112), and formed from the biodegradable resin composition according to any one of claims 1 to 10; and
a second resin layer (113) disposed on the barrier layer.

14. The multilayer barrier film according to claim 13, wherein each of the first resin layer and the second resin layer
- has a lower water vapor transmission rate than the barrier layer, and/or
- comprises a polyolefin polymer or a polyester polymer.

15. A method for manufacturing a biodegradable film as defined in claim 11 or 12 and/or a multilayer barrier film as defined in claim 13 or 14, comprising the following steps:
forming the biodegradable resin composition by kneading the thermoplastic starch, the biodegradable polymer and the plasticizer in an intermal mixer maintained at a temperature ranging from 120°C to 200°C or from 130°C to 180°C, or in an extruder having an inlet temperature ranging from 100°C to 160°C or 120°C to 150°C and a barrel temperature ranging from 120°C to 200°C or 140°C to 180°C,
pressing and/or drying the biodegradable resin composition, wherein pressing is effected at a pressing temperature ranging from 100 ° C to 200 ° Cor 120°C to 180 °C at a pressure of 10 MPa to 30 MPa or 15 MPa to 25 MPa for 1 minute to 3 minutes, and drying is effected at a temperature of 50 ° C to 120 ° C for 30 minutes to 5 hrs.
